# EUROPÄISCHE PATENTSCHRIFT

(11) **EP 0 654 882 B1**
(45) Veröffentlichungstag und Bekanntmachung des Hinweises auf die Patenterteilung: **15.01.1997**
(21) Anmeldenummer: 94117309.8
(22) Anmeldetag: 03.11.1994
(51) Int. Cl.: H02H 7/085

(54) **Verfahren zur Überwachung von beweglichen Elementen**
Process for monitoring movable elements
Procédé pour surveiller des éléments mobiles

(30) Priorität: 18.11.1993 DE 4339365
(43) Veröffentlichungstag der Anmeldung: 24.05.1995
(73) Patentinhaber: Delphi Automotive Systems Deutschland GmbH, D-42369 Wuppertal (DE)
(72) Erfinder: Hahn, Helmuth, Dipl.-Ing., D-40699 Erkrath (DE)
(74) Vertreter: Priebisch, Rüdiger

(56) Entgegenhaltungen:
- DE-A- 3 303 590
- DE-A- 3 532 078
- US-A- 5 218 282

## Beschreibung

Die Erfindung geht aus von einem Verfahren zur Überwachung von beweglichen Elementen gemäß dem Oberbegriff des Anspruches 1.

Es sind Sicherheitsvorrichtungen bei Kraftfahrzeugen bekannt, die eine Verletzung von Personen und Tieren beim automatischen Schließen von elektrisch, pneumatisch oder hydraulisch betätigten Fenstern, Türen oder Schiebedächern verhindern sollen. Um ein Einklemmen von Fremdkörpern zwischen diesen beweglichen Teilen und dem ruhenden Teil zu erkennen, ist es bekannt, die Stromaufnahme und/oder die Drehzahl des Antriebsmotors zu überwachen oder druck- sowie temperaturempfindliche Sensoren zu verwenden, die dann ansprechen und ein auswertbares Signal abgeben, wenn während des Schließvorganges Fremdkörper zwischen das bewegliche Teil und dem ruhenden Teil gelangen.

Aus der DE 2926938 C2 ist eine Vorrichtung zum Antrieb eines beweglichen Elementes bekannt, die als Betriebsgröße zur Einklemmerkennung den Betriebsstrom des Antriebsmotors heranzieht. Darüber hinaus ist als weitere Betriebsgröße die Motordrehzahl genannt. Als Sensor wird ein in Reihe mit dem Elektromotor geschalteter niederohmiger Widerstand verwendet, an dem eine Spannung abgegriffen wird, die proportional dem Betriebsstrom ist. Da der Motorstrom von dem vom Motor aufgebrachten Drehmoment und damit auch von der auf das Antriebsmoment einwirkenden Kraft abhängt, steigt der Motorstrom mit zunehmendem Widerstand, der von dem Antriebselement bei seiner verschiebebewegung überwunden werden muß, an. Die diesem Stromanstieg proportionale Spannung wird einer als Schaltlogik ausgeführten Auswerteeinheit zugeführt. Übersteigt diese Spannung einen Vorgabewert, so wird der Elektromotor abgeschaltet und damit das Betriebselement stillgesetzt. Um nunmehr zwischen einer Schwergängigkeit des Antriebselementes und dem Einklemmen eines Gegenstandes in der vom Antriebselement zu schließenden Öffnung, die gleichermaßen eine Zunahme des Motorstroms bewirken, unterscheiden zu können, wird innerhalb eines vorgegebenen Zeitintervalls der Motorstromzuwachs gemessen und mit einer Abschaltschwelle verglichen. Die Abschaltung wird erst dann ausgelöst, wenn der Differenzquotient dI/dt diese Abschaltschwelle übersteigt und die Addition zweier aufeinanderfolgender über der ersten Abschaltschwelle liegender Stromwerte eine zweite Abschaltschwelle überschreitet. Der schaltungstechnische Aufwand für die Realisierung dieses Verfahrens ist hoch. Darüber hinaus ist nicht sichergestellt, daß über die gesamte Dauer des Schließvorganges eine gleichbleibende reale Einklemmkraft besteht. Die beiden Abschaltschwellen sind voreingestellte Konstanten. Diese Vorgehensweise ist jedoch nur sehr bedingt tauglich, da aufgrund der Fertigungstoleranzen des Antriebsmotors sowie des beweglichen Elementes und der dafür vorgesehenen mechanischen Führungselemente die tatsächlich richtigen Abschaltschwellwerte starken Schwankungen unterworfen sind. Hinzu kommt die Temperatur- und Alterungsabhängigkeit aller Bauteile, die die maßgeblichen Abschaltschwellwerte unvorhersehbar ändert. Es ist nicht sichergestellt, daß über die gesamte Dauer des Schließvorganges eine gleichbleibende reale zulässige Einklemmkraft als Auslösekriterium besteht.

Desweiteren ist es aus der DE 33 03 590 A1 bekannt, bei einer Überwachungsvorrichtung von beweglichen Elementen zwecks Gewährleistung eines Einklemmschutzes eine fortlaufende Aktualisierung der Daten des momentan ablaufenden Schließvorganges anhand des gespeicherten Leistungs-Weg-Diagrammes eines zuvor ungestört abgelaufenen Schließvorganges vorzunehmen. Zu diesem Zweck werden Informationen über die momentane Scheibenstellung, Richtung der Scheibenbewegung und Leistungsaufnahme des Antriebsmotors einer Recheneinheit zugeführt, die dann in Abhängigkeit von diesen Parametern die Daten des ungestörten Weg-Zeit-Diagrammes korrigiert, mit einer vorgegebenen Leistungs-Toleranzgrenze vergleicht und in Abhängigkeit von diesem Vergleichsergebnis den Motorstrom unterbricht bzw. umkehrt. Die Toleranzgrenze weist für den Normalbereich und den Endbereich des Schließvorganges unterschiedliche Werte auf. Auch hier werden als Meßparameter die Umdrehungszahl und die Leistungsaufnahme des Antriebsmotors benutzt.

Der Erfindung liegt die Aufgabe zugrunde, das eingangs genannte Verfahren so zu verbessern, daß ein eingeklemmter Gegenstand sicher erkannt wird, die auf ihn einwirkende Kraft so gering wie möglich gehalten wird und die Richtungsumkehr der Scheibe so schnell wie möglich eingeleitet wird.

Gelöst wird diese Aufgabe mit der im kennzeichnenden Teil des Anspruches 1 angegebenen Merkmale. Das Verfahren gemäß Anspruch 1 weist die Vorteile auf, daß auftretende Gegenkräfte frühzeitig erkannt und unterschieden werden und eine Kompensation systembedingter Störungen erfolgt. Die Einteilung der Meßkurve in Intervalle schafft eine stückweise Linearisierung und ermöglicht eine präzise Beobachtung der Umdrehungszeit des Motors sowie deren Annäherung an eine der an eine der zulässigen Einklemmkraft proportionalen Große. Der Bildung einer Abschaltschwelle aus einem konstanten und einem variablen Anteil liegt zugrunde, daß eine konstante Abschaltschwelle nicht in der Lage ist, normale auftretende Geschwindigkeitsschwankungen durch Reibung, Spiel, Spannungsänderungen etc. zu kompensieren, so daß der Sicherheitsabstand zur Abschaltschwelle immer gleich bleibt.

Zu Beginn eines jeden Intervalles wird die erste gemessene Umdrehungszeit des Motors als Startwert festgehalten. Eine der definierten Einklemmkraft proportionale Zeit wird dann dem Startwert beaufschlagt und bildet die Abschaltschwelle. Diese Abschaltschwelle ist für das einzelne Intervall bezogen auf den Startwert konstant. Das hat den Nachteil, daß durch normale auftretende Schwankungen des Systems die tatsächliche momentane Differenz kleiner sein kann. Dadurch reduziert sich der Sicherheitsabstand.

Um den Sicherheitsabstand auch während systembedingter Geschwindigkeitsschwankungen konstant zu halten, wird der Motorzeit eine einen Kompensationsbereich bildende Korrekturfunktion zuaddiert. Diese Korrekturfunktion ist der variable Anteil der Abschaltschwelle. Der variable Anteil stellt einen empirisch ermittelten Wertebereich zwischen minimaler und maximaler Abweichung der Umdrehungszeit vom Sollwert bei einem ungestörten Schließvorgang dar. Eine reale Einklemmkraft erzeugt eine starke und wesentlich größere Geschwindigkeitsabweichung, als eine systembedingte Schwankung. Geht die Änderung der Umdrehungszeit des Motors über den Kompensationsbereich hinaus, wird der Überprüfungsbereich erreicht. Dies hat zur Folge, daß sofort ein neues Intervall gestartet wird. Hierdurch wird vermieden, daß ein eventuelles Einklemmen, das am Ende eines Intervalles auftritt, erst bei einer relativ hohen Einklemmkraft erkannt wird. Der störungsbedingte Neustart eines Intervalles ist dann erst wieder im nächsten Intervall möglich, da sonst eine ständige Kompensation der Störungen stattfinden würde. Steigt die Einklemmkraft weiter und verläßt den Überprüfungsbereich, erfolgt innerhalb eines Abschaltbereiches eine Auslösung des Einklemmschutzes. Das bewegliche Element stoppt und verfährt in Gegenrichtung.

In der Spannungsversorgung eines Kraftfahrzeuges treten z. B. durch Zündvorgänge verursachte Störungen auf, die dann eine Erhöhung der Umdrehungszeit des Motors zur Folge haben. Selbst diese Störungen werden durch das erfindungsgemäße Verfahren registriert und kompensiert. Außerdem wird durch den direkten Zusammenhang zwischen Spannung und Drehmoment des Motors eine Anpassung der kraftabhängigen Abschaltschwelle an die tatsächliche Betriebsspannung geschaffen.

Um das vom Normalbetrieb abweichende Umdrehungszeitverhalten beim Start und Stop des beweglichen Elementes auszuwerten, wird die Länge der entsprechenden Intervalle in diesen Bereichen verändert. Im Endbereich vor dem Einfahren einer Scheibe in eine Dichtung ist die Intervallänge sehr kurz.

Die Auswertung der Meßwerte übernimmt ein Mikrocomputer, so daß nur wenige Bauteile zur Realisierung des Verfahrens notwendig sind. Die herkömmliche Teilevielfalt wird gesenkt, das fördert eine kompakte Bauweise. Darüber hinaus benötigt der Mikrocomputer keine großen Speicher, da neben einigen Positionswerten nur der augenblickliche und der vorhergehende Wert der Umdrehungszeit des Motors gespeichert werden muß.

Die universelle Einsetzbarkeit des Verfahrens wird durch eine selbständige Initialisierung des beweglichen Elementes erreicht. Beim erstmaligen Zufahren der vorhandenen Öffnung bis in die endgültige Ruheposition des beweglichen Elementes erfassen Sensoren diese Position und übergeben sie als Referenz dem Speicher Erst nach der Initialisierung ist eine Automatikfunktion für den Betrieb des beweglichen Elementes möglich. Der charakteristische Speicherwert unterteilt den Zufahrweg des beweglichen Elementes in zwei Bereiche. In einem unteren Bereich ist der Einklemmschutz voll wirksam. Ein oberer Bereich ist so definiert, daß hier kein lichter Spalt mehr zwischen dem beweglichen Element und der entsprechenden Rahmenkonstruktion bestehen darf. In diesem Bereich ist der Einklemmschutz aufgehoben, so daß ein problemloses Verfahren des beweglichen Elementes in die Endposition möglich ist und darüber hinaus gewährleistet ist, daß dort kein gefährdeter Gegenstand eingeklemmt werden kann.

Die Erfindung wird nachstehend anhand der in den Zeichnungen dargestellten Ausführungsform erläutert.
- Figur 1: zeigt ein Blockschaltbild einer Schaltungsanordnung, die nach dem erfindungsgemäßen Verfahren arbeitet.
- Figur 2: zeigt teilweise ein Diagramm eines Schließvorganges, in dem über die Intervallänge die Umdrehungszeit (tu) des Motors aufgetragen ist.

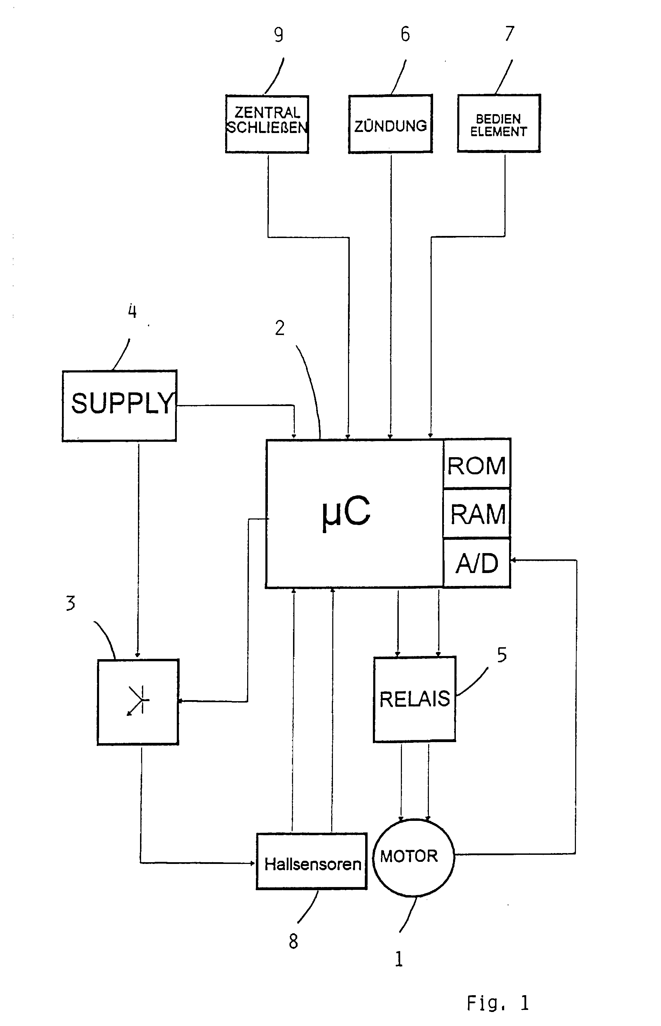

Anhand des Blockschaltbildes in Figur 1 wird nachstehend das prinzipielle Zusammenarbeiten einzelner Bauelemente einer elektrischen Fensterheberschaltung von einem Kraftfahrzeug dargestellt. Die Beschreibung ist auf den Anwendungsfall eines elektrischen Fensterhebers bzw. Schiebedaches gerichtet. Ebenso ist es möglich, mit dem erfindungsgemäßen Verfahren u. a. einen Antriebsmotor für einen selbsttätigen Türschließer zu betreiben.

Ein Antriebsmotor 1 besitzt zwei Drehrichtungen, mit denen ein nicht dargestelltes bewegliches Element, beispielsweise eine Fensterscheibe oder ein Schiebedach, in zwei zueinander entgegengesetzten Bewegungsrichtungen verfahrbar ist. Zwischen dem Motor 1 und der Fensterscheibe kann ein Getriebe geschaltet sein, das die Rotation der Motorwelle in eine Hubbewegung wandelt. Ein Mikrocomputer 2 und ein elektronischer Schalter 3 werden über ein Bordnetz 4 des Kraftfahrzeuges mit Spannung versorgt. Der Mikrocomputer 2 steuert über eine Relaisstation 5 den Motor 1 an. Die Fensterheberschaltung wird erst durch das Einschalten der Zündung 6 betriebsbereit und kann dann über verschiedene Bedienelemente 7, die z. B. in der Türverkleidung oder Mittelkonsole des Kraftfahrzeuges plaziert sind, angesteuert werden. Die Bedienelemente 7 verursachen über den Mikrocomputer 2 und die Relaisstation 5 eine elektromotorische Bewegung des Fensterhebers. Während des Zufahrens der Fensteröffnung wird die Zeit (tu) pro Motorumdrehung (N) gemessen und an den Mikrocomputer 2 übertragen. Bei Ausstattung des Kraftfahrzeuges mit der Funktion "Zentral Schließen" 9, d. h. die Verriegelung aller Fahrzeugtüren von einer zentralen Position aus, wird durch die Fensterheberschaltung zusätzlich ein Verfahren aller Fensterscheiben und Schiebedächer in die Ruheposition bewirkt.

Zwei Hallsensoren 8 liefern dem Mikrocomputer 2 Daten über die Drehrichtung und die Umdrehungszeit (tu) des Motors 1. Aus diesen Daten ergibt sich auch die Information über die Position der Fensterscheibe. Die Hallsensoren 8 sind so angeordnet, daß eine Plausibilitätsprüfung durchgeführt wird. Es soll vermieden werden, daß geringe Schwankungen der Motorwelle falsche Positionsimpulse auslösen. Zur Verminderung des Stromverbrauches werden die Hallsensoren 8 über den elektronischen Schalter 3 vom Mikrocomputer 2 während des Nichtbetriebes in einen spannungslosen Zustand geschaltet. Alle Meßwerte werden mit dem Mikrocomputer 2 erfaßt und aufbereitet sowie alle auszuführenden Aktionen hierdurch gesteuert.

Unmittelbar nach dem Einbau des Fensterhebersystems in das Kraftfahrzeug ist das System nur im Handbetrieb zu bedienen. Die Fensterscheibe bewegt sich nur auf oder ab, solange das entsprechende Bedienelement 7 gedrückt wird, d. h., das Fensterhebersystem verfügt zu diesem Zeitpunkt über keine Automatikfunktion. Das erstmalige Zufahren des Fensters nutzt das Fensterhebersystem zur Initialisierung. Die Hallsensoren 8 geben die Drehrichtung und die Impulse pro Motorumdrehung (N) an den Mikrocomputer 2 weiter. Der Mikrocomputer 2 erkennt die Drehrichtung und damit das Zufahren der Fensteröffnung und addiert die Impulse pro Motorumdrehung (N) bis zum Stillstand des Fensterhebers. Die Endposition wird als Referenz in einem Speicher des Mikrocomputers 2 abgelegt. Danach ist sowohl die Automatikfunktion als auch der Einklemmschutz aktiv. Durch diesen Initialisierungsvorgang ist das Fensterhebersystem universell einsetzbar, da keine typenspezifischen Werte bezüglich der Rahmenkonstruktion oder des Verfahrweges in den Mikrocomputer 2 vorab eingelesen werden müssen. Der Mikrocomputer 2 überlagert die Endposition des Fensters mit einem allgemein gültigen Blockbereich. An der unteren Grenze des Blockbereiches wird der Einklemmschutz aufgehoben, da in dieser Position zwischen einer Fensterdichtung und der oberen Kante der Fensterscheibe kein lichter Spalt mehr existiert und folglich auch kein sicherheitstechnisch gefährdeter Gegenstand dazwischen eingeklemmt werden kann. Die obere Grenze des Blockbereiches liegt über der Endposition der Scheibe und soll z. B. im Fall der Aufweitung der Fensterdichtung durch Alterung ein Verfahren der Scheibe über die Endposition hinaus erlauben, um auch dann ein vollständig geschlossenes Fenster zu gewährleisten.

Der Einklemmschutz wird auf der Grundlage der Umdrehungszeit (tu) des Motors 1 als direkte kraftabhängige Größe realisiert. Die Umdrehungszeit (tu) ist die Zeit, in der die Motorwelle eine vollständige Umdrehung (N) ausführt. Eine Umdrehung (N) ohne Einwirkung von Störkräften hat einen konstanten Hub der Fensterscheibe zur Folge. Wirken Störkräfte auf die Fensterscheibe ein, so erhöht sich die Umdrehungszeit (tu). Als Störgrößen werden hier neben einem tatsächlichen Einklemmen eines Gegenstandes, z. B. Verschmutzungen oder mechanisches Spiel in den Führungselementen verstanden. Während der Bewegung der Fensterscheibe darf es nicht tatsächlich zu einem Einklemmen eines Gegenstandes kommen. Um dies zu verhindern, muß der Antriebsmotor 1 abgeschaltet bzw. in seiner Drehrichtung umgekehrt werden. Eine definierte maximal zulässige Einklemmkraft wird in eine proportionale Erhöhung der Umdrehungszeit (tu) umgerechnet und als Basiswert für die Definition einer Abschaltschwelle im Mikrocomputer 2 abgelegt.

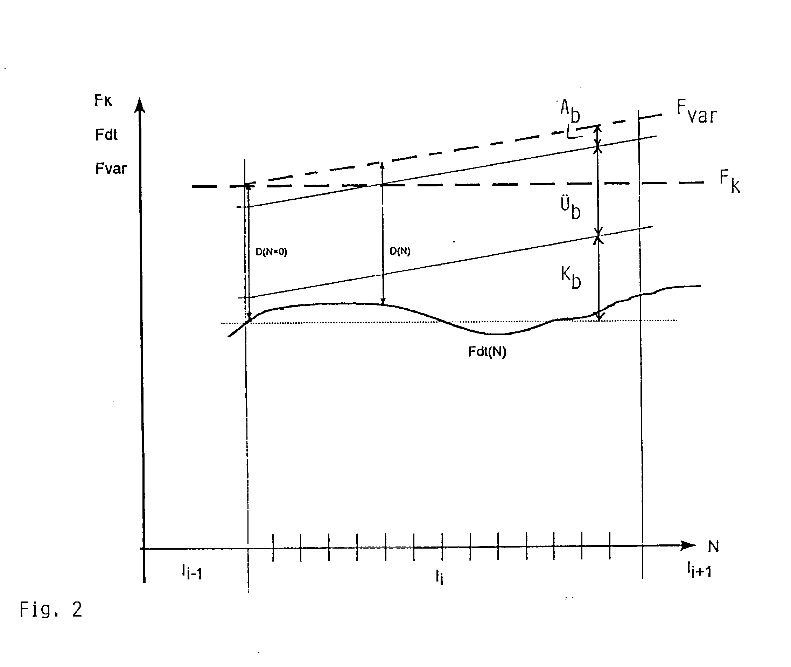

Die Ermittlung der wesentlichen Kennwerte während eines Bewegungsvorganges der Fensterscheibe in Schließrichtung wird anhand des in Figur 2 dargestellten Diagrammes erläutert. Das Diagramm zeigt ausschnittsweise den Verlauf der Umdrehungszeit (tu) des Motors 1 pro Motorschritt. Jede Betätigung des Fensterhebers ist eine für sich abgeschlossene Aktion, d. h. es werden keine Parameter aus vorhergehenden Aktionen übernommen. Die einzulesenden Werte werden nur bis zum nächsten einzulesenden Wert zwischengespeichert. In Figur 2 ist der Verlauf der Meßkurve idealisiert worden, so daß eine durchgehende Linie sichtbar ist. In Wirklichkeit besteht die Kurve aus Punkten, da jedem Schritt, d. h. jeder vollständigen Motorumdrehung (N), nur eine entsprechende Umdrehungszeit (tu) zuzuordnen ist. Jeder Schritt entspricht somit einer Position der Fensterscheibe. Aus je einer bestimmten Anzahl von Schritten wird ein Intervall (Ii) gebildet, wobei diese Intervalle (Ii) keinen festen Bezug zur Fensterposition haben. Die Lange der Intervalle (Ii) ist mit Ausnahme des ersten und letzten Intervalles (Ii) konstant. Wird der Motor 1 gestartet, so erfolgt in diesem Intervall (Ii) die Anlaufphase des Systems. Alle weiteren Intervalle (Ii) sind Betriebsphasen. Im Endbereich vor dem Einfahren der Fensterscheibe in eine Dichtung wird die Intervallänge automatisch verändert. Durch die Einteilung der Meßkurve in Intervalle (Ii) wird diese stückweise linearisiert.

Wird sofort nach einem Motorstart von der Motorwelle kein Signal für die Umdrehungszeit (tu) geliefert, so blockiert ein starres Hindernis die Fensterscheibe und der Einklemmschutz wird hier durch diese statische Auswertung ausgelöst. Beim dynamischen Start des Motors ist mechanisches Spiel auszugleichen, das zu einem Einschwingen in der Meßkurve führt. Dies ist in Höhe und Dauer von der verwendeten Mechanik und der vorausgegangenen Drehrichtung abhängig. Der Einklemmschutz ist hier aber schon uneingeschränkt nach der ersten Motorumdrehung (N) aktiv.

Für den Einklemmschutz gelten folgende Bewertungskriterien: Zu Beginn eines jeden Intervalles (Ii) wird die erste Umdrehungszeit (tu) gemessen, die dann als Bezugswert bis zum Ende des Intervalles (Ii) gilt. Der Mikrocomputer 2 berechnet aus diesem Wert eine Funktion (Fk) für einen ersten Anteil einer Abschaltschwelle. Die Amplitude der Funktion (Fk) ist konstant und ist um einen der zulässigen Einklemmkraft proportionalen Zeitwert höher als der Bezugswert. Die Höhe der Amplitude ist ursächlich von der Betriebsspannung des Motors 1 abhängig, da hierdurch das Drehmoment des Motors 1 und infolgedessen die Einklemmkraft beeinflußt wird. Die Schwergängigkeit der Fensterscheibe oder das Einklemmen eines Gegenstandes bewirkt eine kraftabhängige Zunahme der Umdrehungszeit (tu), so daß eine direkte Beziehung zwischen diesen Parametern besteht. Demzufolge ist die Differenz (Dn0) zwischen dem ersten Anteil der Abschaltschwelle und dem Bezugswert über die gesamte Länge des Intervalles (Ii) konstant und ist ein erstes Maß für die zulässige Kraftaufwendung. Das hat den Nachteil, daß durch normale auftretende Schwankungen (Reibung, Spiel etc.) des Systems die tatsächliche momentane Differenz (Dn) kleiner sein kann. Dadurch reduziert sich der Sicherheitsabstand. Da eine reale Einklemmkraft eine wesentlich größere Abweichung erzeugt als normale Schwankungen, ist es von Vorteil, die systembedingten Schwankungen zu kompensieren. Um die Differenz (Dn) trotz dessen annähernd konstant zu halten, wird eine Korrekturfunktion (Fvar) berechnet, die den zweiten Anteil der Abschaltschwelle bildet. Die Amplitude dieser Korrekturfunktion (Fvar) überragt die Funktion (Fk) und variiert. Der Höchstwert der Korrekturfunktion (Fvar) stellt die maximal zulässige Einklemmkraft dar. Die Abschaltschwelle für den Einklemmschutz setzt sich somit aus einem konstanten und einem variablen Anteil zusammen.

Um ein Ansteigen der Umdrehungszeit (tu) sicher und richtig bewerten zu können, ist ein Kompensationsbereich (Kb) vorgesehen, der z. B. 80 % der Differenz (Dn0) beträgt. Geht die Änderung der Umdrehungszeit (tu) des Motors 1 über den Kompensationsbereich (Kb) hinaus, wird der sogenannte Überprüfungsbereich (Üb) erreicht, der ebenfalls als Anteil der Differenz (Dn0) definiert ist. Dies hat zur Folge, daß sofort ein neues Intervall (Ii +1) gestartet wird. Hierdurch wird vermieden, daß ein eventuelles Einklemmen, das am Ende eines Intervalles (Ii) auftritt, erst bei einer relativ hohen Einklemmkraft erkannt wird. Dieser störungsbedingte Neustart eines Intervalles (Ii) ist erst wieder im nächsten Intervall (Ii) möglich, da sonst eine ständige Kompensation der Störungen stattfinden würde. Setzt sich in dem neugestarteten Intervall (Ii) die Änderung der Umdrehungszeit (tu) fort, so wird nach Verlassen des Überprüfungsbereiches (Üb) ein Auslösebereich (Ab) erreicht und der Motor 1 abgeschaltet oder in seiner Drehrichtung umgekehrt. Die Einklemmkraft tritt dann an die Grenze des maximal Zulässigen. Setzt sich hingegen die Steigung der Umdrehungszeit (tu) nicht fort, so wird das Intervall (Ii) bis zum Ende störungsfrei durchlaufen. Anschließend wird die normale intervallgemäße Meßwertaufnahme fortgesetzt. Jede Betätigung des Fensterhebers ist eine für sich abgeschlossene Aktion. Das heißt, es werden bis auf bestimmte Positionswerte keine Parameter aus vorhergehenden Aktionen übernommen. Die einzulesenden Umdrehungszeiten (tu) werden nur bis zum nächsten einzulesenden Wert dazwischengespeichert. Die berechnete Abschaltschwelle treibt im Hintergrund des Mikrocomputers 2 und wird nur bei einer Verringerung der Differenz (Dn) in die Meßwertaufnahme und Meßwertauswertung eingeblendet, um die Kompensation oder den Neustart eines Intervalles (Ii) zu veranlassen. Neben den schon erwähnten Störungen kompensiert das System auch durch Zündvorgänge auftretende Spannungseinbrüche, die eine Erhöhung der Umdrehungszeit (tu) nach sich ziehen.

Das erfindungsgemäße Verfahren nutzt zur Auswertung der auftretenden Störkräfte keine Zeitintervalle, sondern ausschließlich Positionswerte, so daß der Kräfteverlauf beliebig sein kann. Es erfolgt keine Bewertung des Störgrößenverlaufes.

### Bezugszeichenliste

- 1: Motor
- 2: Mikrocomputer
- 3: elektronischer Schalter
- 4: Bordnetz
- 5: Relais
- 6: Zündung
- 7: Bedienelemente
- 8: Hallsensoren
- 9: Zentral Schließen
- Ii: Intervall
- N: Umdrehung
- tu: Umdrehungszeit (tu)
- Kb: Kompensationsbereich
- Üb: Überprüfungsbereich
- Ab: Abschaltbereich
- Fk: erster Anteil der Abschaltschwelle
- Fvar: variabler Anteil der Abschaltschwelle
- Dn: Differenz

## Patentansprüche

1. Verfahren zur Überwachung von beweglichen Elementen, insbesondere von mittels eines Elektromotors (1) angetriebenen Scheiben oder Schiebedächern in Kraftfahrzeugen, zwecks Gewährleistung eines Einklemmschutzes, wobei
- die Umdrehungszeit (tu) und die Drehrichtung des Elektromotors (1) mittels Sensoren (8) erfaßt werden,
- innerhalb von Positionsintervallen (Ii), deren Länge von der Lage des beweglichen Elementes innerhalb der Rahmenkonstruktion abhängig ist, der zuletzt ermittelte Wert der Umdrehungszeit (tu) in einer Auswerteeinheit (2) mit einer Abschaltschwelle verglichen und wenigstens ein Schaltsignal abgegeben wird, und wobei
- durch das Schaltsignal ein Schaltelement (5) angesteuert wird, wodurch die Abschaltung oder Reversierung des Elektromotors (1) erfolgt,
dadurch gekennzeichnet, daß
- die Abschaltschwelle auf die Umdrehungszeit (tu) zum Beginn eines jeden Intervalles (Ii) bezogen ist und sich aus einem konstanten Anteil und aus einem variablen Anteil zusammensetzt, der einen empirisch ermittelten Wertebereich zwischen minimaler und maximaler Abweichung der Umdrehungszeit (tu) vom Sollwert bei einem ungestörten Schließvorgang darstellt, zusammensetzt, wobei durch die Höhe der Differenz (Dn) zwischen der Abschaltschwelle und dem zuletzt ermittelten Wert der Umdrehungszeit (tu), das Schaltsignal wirksam gesetzt oder unwirksam gelassen wird.

2. Verfahren nach Anspruch 1, dadurch gekennzeichnet, daß die Differenz (Dn) in einen Kompensationsbereich (Kb), einen Überprüfungsbereich (Üb) und einen Abschaltbereich (Ab) unterteilt ist, wobei die Umdrehungszeit (tu) innerhalb des Kompensationsbereiches (Kb) das Schaltsignal negativ beeinflußt, innerhalb des Überprüfungsbereiches (Üb) ein Signal generiert, das den unmittelbaren Neustart eines Intervalles (Ii +1) innerhalb eines Betätigungsvorganges verursacht, und innerhalb des Abschaltbereiches (Ab) das Schaltsignal positiv beeinflußt.

3. Verfahren nach Anspruch 1 oder 2, dadurch gekennzeichnet, daß Änderungen der Umdrehungszeit (tu), die durch Schwankungen der Versorgungsspannung hervorgerufen werden, erkannt werden.

4. Verfahren nach einem der Ansprüche 1 bis 3, dadurch gekennzeichnet, daß sich der variable Anteil der Abschaltschwelle aus einer linearen Funktion errechnet.

5. Verfahren nach einem der Ansprüche 1 bis 4, dadurch gekennzeichnet, daß die Abschaltschwelle nur an den Stellen während des Betätigungsvorganges eingeblendet wird, an denen die Umdrehungszeit (tu) den Kompensationsbereich (Kb) verläßt.

6. Verfahren nach einem der Ansprüche 1 bis 5, dadurch gekennzeichnet, daß sich die Länge der Intervalle (Ii) am Anfang und am Ende des Betätigungsvorganges von der Länge der Normalintervalle unterscheidet.

7. Verfahren nach einem der Ansprüche 1 bis 6, dadurch gekennzeichnet, daß als Auswerteeinheit ein Mikrocomputer (2) verwandt wird.

8. Verfahren nach einem der Ansprüche 1 bis 7, dadurch gekennzeichnet, daß der augenblickliche und der vorhergehende Meßwert zur Auswertung der Differenz (Dn) benötigt wird.

9. Verfahren nach einem der Ansprüche 1 bis 8, dadurch gekennzeichnet, daß die Abschaltschwelle für den Einklemmschutz wahrend eines Betätigungsvorganges bei Erreichung eines Blockbereiches abgeschaltet wird.

10. Verfahren nach einem der Ansprüche 1 bis 9, dadurch gekennzeichnet, daß die Sensoren (8) während eines Initialisierungsvorganges das Erreichen der Endposition durch das bewegliche Element erfassen und der Mikrocomputer (2) die Endposition als Referenz abspeichert, um daraus die Grenzen des Blockbereiches zu berechnen.

11. Verfahren nach einem der Ansprüche 1 bis 10, dadurch gekennzeichnet, daß der Blockbereich an der Stelle beginnt, an der keine lichte Öffnung mehr zwischen dem beweglichen Element und der Rahmenkonstruktion besteht.

## Claims

1. A process for monitoring movable elements, in particular discs driven by an electric motor (1) or sliding roofs in motor vehicles, for the purpose of ensuring protection from squeezing, wherein
- the time of revolution (tu) and the direction of rotation of the electric motor (1) are detected using sensors (8),
- within position intervals (Ii) with a length dependent on the position of the movable element within the frame structure, the last determined value of the time of revolution (tu) is compared in an evaluation unit (2) with a cut-off threshold and at least one switching signal is given, and wherein
- a switching element (5) is triggered by the switching signal causing disconnection or reversal of the electric motor (1),
characterised in that.
- the cut-off threshold is applied to the time of revolution (tu) at the start of each interval (Ii) and consists of a constant portion and a variable portion which is an empirically determined range of values between the minimum and the maximum deviation of the time of revolution (tu) from the ideal value during uninterrupted closing, wherein the switching signal is made operative or left inoperative as a result of the level of the difference (Dn) between the cut-off threshold and the last determined value of the time of revolution (tu).

2. A process according to Claim 1, characterised in that the difference (Dn) in a compensation range (Kb), a checking range (Üb) and a cut-off range (Ab) is subdivided, wherein the time of revolution (tu) affects the switching signal adversely within the compensation range (Kb), generates a signal within the checking range (Üb), which signal causes the immediate restart of an interval (Ii+1) within actuation, and affects the switching signal positively within the cut-off range (Ab).

3. A process according to Claim 1 or 2, characterised in that changes of the time of revolution (tu) caused by fluctuations of the supply voltage are detected.

4. A process according to any one of Claims 1 to 3, characterised in that the variable portion of the cut-off threshold is calculated from a linear function.

5. A process according to any one of Claims 1 to 4, characterised in that the cut-off threshold is only blended in during actuation at the points at which the time of revolution (tu) leaves the compensation range (Kb).

6. A process according to any one of Claims 1 to 5, characterised in that the length of the interval (Ii) at the start and at the end of actuation differs from the length of the normal interval.

7. A process according to any one of Claims 1 to 6, characterised in that a microcomputer (2) is used as an evaluation unit.

8. A process according to any one of Claims 1 to 7, characterised in that the momentary and the preceding measured value is required to evaluate the difference (Dn).

9. A process according to any one of Claims 1 to 8, characterised in that the cut-off threshold for protection from squeezing is disconnected during actuation on reaching a block range.

10. A process according to any one of Claims 1 to 9, characterised in that during initialisation the sensors (8) detect that the movable element has reached its final position, and the microcomputer (2) stores the final position as a reference to calculate the boundaries of the block range.

11. A process according to any one of Claims 1 to 10, characterised in that the block range starts at the point at which there is no clear opening between the movable element and the frame structure.

## Revendications

1. Procédé pour contrôler des éléments mobiles, notamment des vitres ou des toits coulissants, entraînés au moyen d'un moteur électrique (1), dans des véhicules automobiles, tout en garantissant une protection contre un coincement, selon lequel
- la durée de rotation (tu) et le sens de rotation du moteur électrique (1) sont détectés au moyen de capteurs (8),
- pendant des intervalles entre positions (Ii), dont la longueur dépend de la position de l'élément mobile à l'intérieur de la structure en forme de cadre, la valeur déterminée en dernier lieu de la durée de rotation (tu) est comparée, dans une unité d'évaluation (2), à un seuil de débranchement et au moins un signal de commutation est délivré, et selon lequel
- un élément de commutation (5) est commandé par le signal de commutation, ce qui a pour effet que le débranchement ou l'inversion du sens du moteur électrique (1) est exécuté,
caractérisé en ce que
- le seuil de débranchement est rapporté à la durée de rotation (tu) au début de chaque intervalle (Ii) et se compose d'une partie constante et d'une partie variable, qui représente une gamme de valeurs, déterminée de façon empirique, entre des écarts minimum et maximum de la durée de rotation (tu) par rapport à la valeur de consigne dans le cas d'un processus de fermeture non perturbé, le signal de commutation étant activé ou rendu inactif au moyen de la valeur de la différence (Dn) entre le seuil de débranchement et la valeur déterminée en dernier lieu de la durée de rotation (tu).

2. Procédé selon la revendication 1, caractérisé en ce que la différence (Dn) est subdivisée en une zone de compensation (Kb), une zone de contrôle (Üb) et une zone de débranchement (Ab), et la durée de rotation (tu) à l'intérieur de la zone de compensation (Kb) influe négativement sur le signal de commutation, et un signal, qui déclenche le redémarrage direct d'un intervalle (Ii+1) à l'intérieur d'un processus d'actionnement, est déclenché à l'intérieur de la zone de contrôle (Üb), et le signal de commutation est influencé positivement à l'intérieur de la zone de débranchement (Ab).

3. Procédé selon la revendication 1 ou 2, caractérisé en ce que des modifications de la durée de rotation (tu), qui sont provoquées par des variations de la tension d'alimentation, sont identifiées.

4. Procédé selon l'une des revendications 1 à 3, caractérisé en ce que la partie variable du seuil de débranchement est calculée à partir d'une fonction linéaire.

5. Procédé selon l'une des revendications 1 à 4, caractérisé en ce que le seuil de débranchement est appliqué pendant le processus d'actionnement, uniquement aux endroits où la durée de rotation (tu) quitte la zone de compensation (Kb).

6. Procédé selon l'une des revendications 1 à 5, caractérisé en ce que la longueur des intervalles (Ii) à la fin et au début du processus d'actionnement diffère de la longueur des intervalles normaux.

7. Procédé selon l'une des revendications 1 à 6, caractérisé en ce qu'on utilise comme unité d'évaluation un micro-ordinateur (2).

8. Procédé selon l'une des revendications 1 à 7, caractérisé en ce que la valeur de mesure instantanée et la valeur de mesure précédente sont nécessaires pour l'évaluation de la différence (Dn).

9. Procédé selon l'une des revendications 1 à 8, caractérisé en ce que le seuil de débranchement pour la protection contre un coincement pendant un processus d'actionnement est supprimé lorsqu'une zone de blocage est atteinte.

10. Procédé selon l'une des revendications 1 à 9, caractérisé en ce que pendant un processus d'initialisation, les capteurs (8) détectent le fait que la position finale est atteinte par l'élément mobile, et le micro-ordinateur (2) mémorise la position finale en tant que référence, pour calculer, à partir de là, les limites de la zone de blocage.

11. Procédé selon l'une des revendications 1 à 10, caractérisé en ce que la zone de blocage commence à l'endroit où il n'existe plus aucune ouverture entre l'élément mobile et la structure en forme de cadre.
